# EUROPEAN PATENT SPECIFICATION

(11) **EP 0 429 803 B1**
(45) Date of publication and mention of the grant of the patent: **14.12.1994**
(21) Application number: 90119143.7
(22) Date of filing: 05.10.1990
(51) Int. Cl.: B65G 47/68

(54) **A method for marshalling objects**
Verfahren zur Verteilung von Gegenständen
Procédé pour la distribution des objets

(30) Priority: 23.11.1989 SE 8903937
(43) Date of publication of application: 05.06.1991
(73) Proprietor: Tetra Laval Holdings & Finance SA, 1009 Pully (CH)
(72) Inventor: Sjöstrand, Uno, S-240 32 Flyinge (SE)
(74) Representative: Müller, Hans-Jürgen, Dipl.-Ing.

(56) References cited:
- GB-A- 2 053 824
- US-A- 4 003 465
- US-A- 4 060 165
- Abstracts of Japan, vol. 9, Nr. 279 (M-427), abstract of JP-A-60-122623 Miyake Seisakusho K.K.) 1 July 1985

## Description

The invention relates to a method of marshalling objects like packages which are advanced from one ingoing conveyor to one of at least two outgoing conveyors after separating.

Use is often made within the manufacturing industry of conveyors for moving objects from, for example, the production unit to packing or distribution. Not least in the packing of foods such as, for example, milk or juice in e.g. disposable cartons, the ready-filled cartons are conveyed from the filling machine to some form of distribution unit in order that the cartons may more readily be handled in the distribution stage to the consumer.

Most generally, a single conveyor departs from the filling machine. It is occasionally desirable to marshal the packages in the form of e.g. cartons on this single conveyor onto two different conveyors. By such means, it will be possible to cause a certain proportion of production to be distributed in one way and the remaining proportion of production in another way. Objects on two conveyors may also be led into one and the same distribution unit with a view to increasing output capacity.

However, problems have previously been experienced in this art in exactly marshalling cartons or other objects in a given distribution ratio. Furthermore, prior art distributor devices have not proved capable of marshalling objects on their way into or out of the distributor, but instead the distributor has had to be run until completely empty, which, in turn entails that output capacity will be very low indeed.

A method according to the opening part of claim 1 is described in US-A-4 060 165. This document describes marshalling glasses which are advanced on an ingoing conveyor belt between rails which do not hinder the movement of the glasses. As soon as the glasses are reaching first guiding rails they are separated from each other by a starwheel in order to be transferred to other railgates depending on the position at which the second railgates are situated with regard to the first railgates. Then, the glasses are advanced to outgoing conveyors. In case packages like cartons of cardboard or paper packages filled with fluids, like milk, fruit juice etc. which are primarily of rectangular form are to be marshalled the known method is very disadvantageous. There is a risk that parallel epipedic packages will be bent invertly when starwheels engage on them so that there is a risk of forming ruptures or of destroying the packages. Furthermore, there is a risk of rotating the packages unless the railgates are sufficiently close so that the packages are incorrectly market during their subsequent handling by e.g. attaching labels on them or by printing them.

Furthermore, it is known (GB-A-2 053 824) to squeeze articles between two endless bells and to carry them with linear movement along a track in order to print the articles during their movement by a rotary printing plate.

The object of the present invention is to overcome the disadvantages mentioned above by a simple method which allows also adjusting the method to different sizes and kinds of packages to be marshalled.

The invention is characterized in claim 1 and preferred embodiments thereof is claimed in claim 2.

According to the present invention the gap forming belt brokes allow to control the distance between packages. Different gaps are registered by e.g. photocells in order to create signals e.g. electrical or optical pulses which are controlling the gates. By creating a longer gap between two subsequent packages it is possible to have more time to move one gate with regard to the other gate.

The nature of the present invention and its aspects will be more readily understood from the following brief description of the accompanying Drawings, and discussion relating thereto. In the accompanying Drawings:
- Fig. 1: is a simplified plan view of a distributor with its ingoing and outgoing conveyors;
- Fig. 2: illustrates the marshalling gates; and
- Fig. 3: illustrates the ingoing conveyor which continues as one of the outgoing conveyors.

The Drawings show only those details which are essential for an understanding of the present invention.

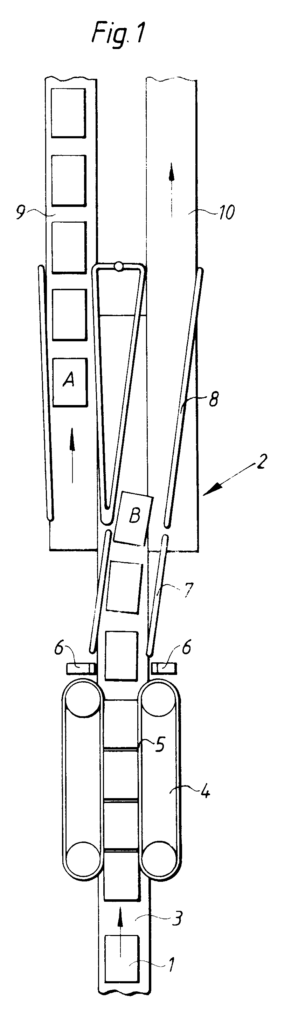

As is illustrated in Fig. 1 package 1 in the form of advance in towards a distributor 2 of an ingoing conveyor 3 with an endless conveyor surface.

Immediately ahead of the distributor 2, there is disposed a belt brake 4 of conventional type in which belts 5 protrude in towards the packages 1 on either side thereof and retard the movement of the packages 1 at the same time as these slip on the conveyor surface. The belt brake 4 makes it possible to release the rectangular cartons with uniform spacing or gaps.

These gaps between the cartons and packages 1, resp. are registered by, for example, a pair of photocells 6 disposed downstream of the belt brake 4 seen in the direction of movement of the cartons. The registrations are transmitted to a master control system and, after a certain number of gaps, i.e. after a certain number of cartons has departed from the belt brake 4, the master control system emits a signal to the belt brake 4 which restrains the subsequent carton so that a longer gap, or marshalling gap, occurs. The length of this gap varies in response to the size of the packages 1 and the speed of the conveyors. With a certain time-lag, so that the marshalling gap will be located in register with the joint between the two gates in the distributor 2, the master control system emits a switch signal.

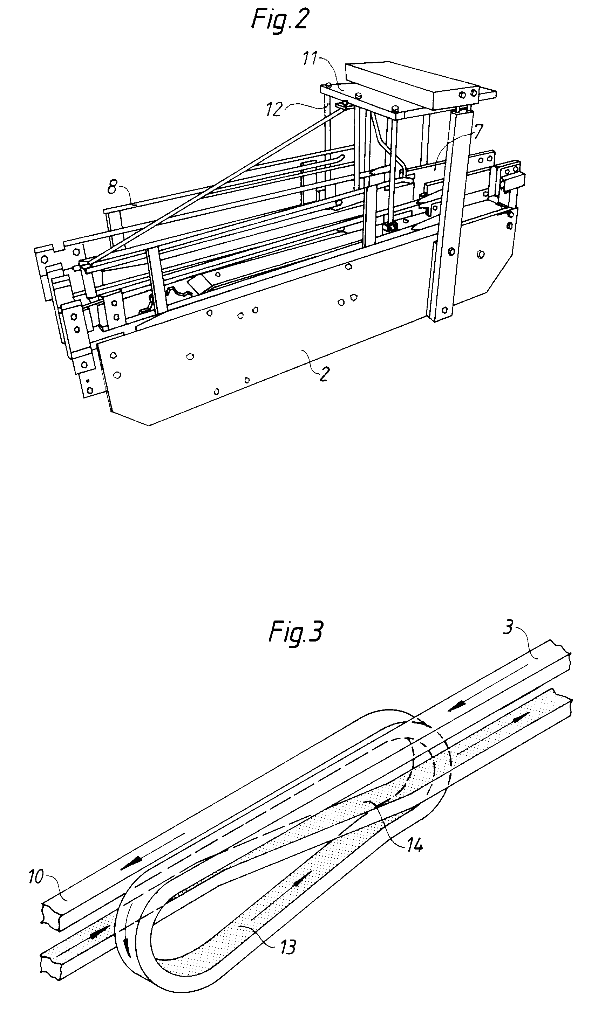

The two gates, a single first gate 7 above the ingoing conveyor 3 and a double other gate 8 above both of the outgoing conveyors 9 and 10, are mechanically interconnected with parallel arms 11 which are illustrated in Fig. 2. These are suitably manoeuvred by a pneumatic piston and cylinder assembly. Hence, the gates 7 and 8 move towards one another so that a path is opened either from the ingoing conveyor 3 to the left-hand outgoing conveyor 9, or from the ingoing conveyor 3 to the right-hand outgoing conveyor 10. Two gates 7 and 8 which move towards one another each have a shorter distance to travel than if only one gate had been employed, which results in a more rapid distributor. Each gate 7, 8 changes its angular position by only 50% of what would have been necessary using one single gate.

When the marshalling gap is now located between the single gate 7 and the double gate 8, the gates 7 and 8 begin to move towards one another. At this point, the distributor 2 is filled with packages 1 which, thus, accompany the gates 7 and 8 in their movements without being obstructed in their advancement. Fig. 1 shows how a switch has just taken place between cartons A and B. When a preselected number of packages 1 after carton B has departed from the belt brake 4, a marshalling gap is once again created and a signal is emitted with time-lag to the gates 7 and 8, whereafter switching once again takes place.

Fig. 2 illustrates the gates 7 and 8 and the superjacent parallel arms 11 which make for a coordinated movement of the gates 7 and 8 towards one another. The parallel arms 11 are connected to the gates 7 and 8 by means of vertical struts 12. The gates 7 and 8 may also be interconnected such that some form of parallel arm linkage is disposed beneath the conveyors.

Fig. 3 shows how the ingoing conveyor 3 may be caused to continue as one of the outgoing conveyors 10, this saving one drive station. The other outgoing conveyor 9 is wholly separate from this arrangement, with its own drive station. The ingoing conveyor 3 turns and runs obliquely backwards on a rail 13, turning upwards again as an outgoing conveyor 10. This outgoing conveyor 10 having reached its final destination, it once again turns and returns. On its way, it changes level so that it can pass beneath the distributor 2 and runs, on a rail 14, obliquely under the distributor 2 and back, whence the ingoing conveyor 3 starts. On its return it changes level and turns upwards at the starting point.

As will be apparent from the above description, the present invention realises a method for marshalling objects from one conveyor onto two conveyors, with a maintained high output capacity since the switching between the different conveyors can take place while objects are still in the distributor. The method according to the present invention also makes possible the distribution of an exact number onto each conveyor, which may be necessary when a certain proportion of production is intended to be conveyed to one distribution unit and the remaining proportion of production to another distribution unit.

## Claims

1. Method of marshalling packages (1,A,B) comprising the following method steps:
a) advancing said packages (1) on an ingoing conveyor (3)
b) separating said packages (1) from each other by forming distances and gaps, respectively, between succeeding packages (1),
c) guiding each separated package (A, B) to one of at least two outgoing conveyors (9, 10)
characterized by the following method steps:
d) decreasing the advancing speed of said ingoing packages (1) before they are separated by means of a belt brake (4) which runs at a lower speed than said ingoing conveyor (3)
e) creating counting signals depending on said gaps
f) creating a marshalling gap when a predetermined number of counting signals is reached in order to create a longer gap.

2. Method as claimed in claim 1,
characterized in that
the belt brake (4) operates at approximately 20% slower speed than the ingoing conveyor (3).

## Patentansprüche

1. Verfahren zum Verschieben von Packungen (1, A, B), das die folgenden Schritte aufweist:
a) die Packungen (1) werden auf einer eingehenden Fördereinrichtung (3) vorgeschoben;
b) die Packungen (1) werden durch die Bildung von Abstanden bzw. Lücken zwischen aufeinanderfolgenden Packungen (1) voneinander getrennt;
c) jede getrennte Packung (A, B) wird wenigstens zu einer von zwei abgehenden Fördereinrichtungen (9, 10) geführt;
gekennzeichnet durch die folgenden Verfahrensschritte:
d) die Vorschubgeschwindigkeit der eingehenden Packungen (1) wird vermindert, ehe sie mittels einer Bandbremse (4) getrennt werden, die mit niedrigerer Geschwindigkeit als die eingehende Fördereinrichtung (3) läuft;
e) in Abhängigkeit von den Lücken werden Zählsignale geschaffen;
f) ein Verschiebelücke wird geschaffen, wenn eine vorbestimmte Anzahl von Zählsignalen erreicht ist, um eine längere Lücke zu schaffen.

2. Verfahren nach Anspruch 1,
**dadurch gekennzeichnet**,
daß die Bandbremse (4) mit einer etwa 20% geringeren Geschwindigkeit als die eingehende Fördereinrichtung (3) arbeitet.

## Revendications

1. Procédé de répartition de paquets (1, A, B) comprenant les étapes suivantes :
a) faire avancer lesdits paquets (1) sur un convoyeur entrant (3)
b) séparer lesdits paquets (1) les uns des autres en formant des espaces et des intervalles, respectivement, entre des paquets successifs (1),
c) guider chaque paquet séparé (A, B) vers un parmi au moins deux convoyeurs sortants (9, 10) caractérisé par les étapes suivantes :
d) réduire la vitesse d'avancée desdits paquets entrants (1) avant qu'ils soient séparés au moyen d'un frein à courroie (4) qui tourne à une vitesse plus petite que ledit convoyeur entrant (3)
e) créer des signaux de comptage qui sont fonction desdits intervalles
f) créer un intervalle de répartition quand un nombre prédéterminé de signaux de comptage est atteint afin de créer un intervalle plus grand.

2. Procédé selon la revendication 1,
caractérisé en ce que
le frein à courroie (4) fonctionne à une vitesse inférieure d'environ 20 % à celle du convoyeur entrant (3).
